# EUROPÄISCHE PATENTSCHRIFT

(11) **EP 0 869 045 B1**
(45) Veröffentlichungstag und Bekanntmachung des Hinweises auf die Patenterteilung: **23.05.2007**
(21) Anmeldenummer: 98101594.4
(22) Anmeldetag: 30.01.1998
(51) Int. Cl.: B60T 8/26

(54) **Verfahren zur Abbremsung eines Fahrzeugs**
Brake procedure for a vehicle
Procédé de freinage d'un véhicule

(30) Priorität: 04.04.1997 DE 19713920
(43) Veröffentlichungstag der Anmeldung: 07.10.1998
(60) Teilanmeldung: 05021566.4
(73) Patentinhaber: WABCO GmbH, 30453 Hannover (DE)
(72) Erfinder: Zielke, Frank, 30890 Barsinghausen (DE); Hinz, Wolfgang, 31515 Wunstorf (DE)
(74) Vertreter: Schrödter, Manfred

(56) Entgegenhaltungen:
- DE-C- 19 514 185
- GB-A- 2 138 086
- US-A- 3 797 893
- US-A- 5 011 236
- US-A- 5 163 742

## Beschreibung

Die Erfindung betrifft ein Verfahren zur Abbremsung eines Fahrzeugs gemäß dem Oberbegriff des Patentanspruchs 1.

Darin sollen die Begriffe "Vorderachse" und "Hinterachse" sowohl jeweils eine Einzelachse als auch jeweils eine Achsgruppe erfassen, die sich wie eine Einzelachse verhält. Diese Bedingung erfüllt beispielsweise ein Doppelachsaggregat mit einem Achsabstand bis zu 1,6 m, wenn dessen Achsen untereinander hinsichtlich der Lastverteilung und der Reibwertausnutzung zwischen den Rädern und der Fahrbahn statisch und dynamisch ausgeglichen sind.

Im Stillstand und in Fahrt mit gleichmäßiger Geschwindigkeit befindet sich ein Fahrzeug im "statischen" Zustand. Ein "dynamischer" Zustand eines Fahrzeugs tritt beim Beschleunigen und beim Abbremsen des Fahrzeugs auf. Während der Dauer dieses Zustands treten infolge der dynamischen Achslastverlagerung an die Stelle(n) der statischen Achslastverteilung bzw. der statischen Achslasten dynamische Werte. Beim Abbremsen eines Fahrzeugs in der Vorwärtsfahrt tritt eine dynamische Achslastverlagerung von der Hinterachse zur Vorderachse auf, deren Größe u. a. von der Höhe der Fahrzeugverzögerung abhängt. Diese Achslastverlagerung kann bei einigen Fahrzeugbauarten unter bestimmten Beladungsbedingungen bei höheren Fahrzeugverzögerungen bis zum völligen Verlust der Bodenhaftung an der Hinterachse und damit zu einer erheblichen Einbuße an Richtungsstabilität des Fahrzeugs führen. Besonders auffällig sind in diesem Zusammenhang Fahrzeuge mit geringem statischen Hinterachslast-Anteil, insbesondere in Verbindung mit hoch liegendem Schwerpunkt. Beispiele für solche Fahrzeuge finden sich insbesondere unter den solo fahrenden Sattelzugmaschinen (Semi-trailer-tractors), d. h. Sattelzugmaschinen ohne Auflieger.

US-PS 3,797,893 beispielsweise zeigt eine Bremskraftregelung für Fahrzeuge, insbesondere Kraftfahrzeuge, wobei jedem Rad ein Sensor zur Bestimmung seines Drehzustandes zugeordnet ist, dessen Signale bei Über oder Unterschreiten von bestimmten Schwellwerten Einlass- und Auslassventile betätigen, so dass der Bremsdruck entweder ansteigt, konstant bleibt oder absinkt, wobei, insbesondere für Fahrzeuge mit einem hoch liegenden Schwerpunkt und besonders bei kurzem Radstand, eine weitere logische Verknüpfungsschaltung vorgesehen ist, welche den Druck an den Vorderradbremsen absenkt, wenn ein die Bodenhaftung der Hinterräder symbolisierendes Signal nicht mit einer bestimmten zeitlichen Verzögerung eintrifft.

Der Erfindung liegt die Aufgabe zugrunde, mit einfachen Mitteln die Richtungsstabilität kritischer Fahrzeuge der in dem Oberbegriff des Patentanspruchs 1 genannten Art beim Abbremsen zu verbessern.

Diese Aufgabe wird durch die in dem Patentanspruch 1 angegebene Erfindung gelöst.

Bei hohen Fahrzeugverzögerungen kann die oben erwähnte dynamische Achslastverlagerung bei besonders kritischen Fahrzeugen zu einem Abheben der Hinterachse mit einem Kippen des Fahrzeugs um seine Querachse führen. Diese gefährliche Erscheinung unterbindet die Erfindung.

Die Erfindung läßt sich praktisch ohne oder nur mit geringem zusätzlichen Aufwand in Verbindung mit blockiergeschützten Bremsanlagen jeder Bauart und für jede Art Druckmittel ausführen.

Die Erfindung wird nunmehr unter Angabe weiterer Vorteile anhand zeichnerisch dargestellter, für die Ausführung der Erfindung geeigneter, Beispiele von Bremsanlagen erläutert. Unter durchgehender Verwendung gleicher Bezugszeichen für Bauelemente mit gleichen Funktionen sowie mit durchgehenden Linien für Druckleitungen und strichpunktierten Linien für elektrische Signal- und Steuerleitungen zeigen
- Fig. 1: schematisch eine Bremsanlage,
- Fig. 2: schematisch eine Bremsanlage anderer nicht-beanspruchter Bauart.

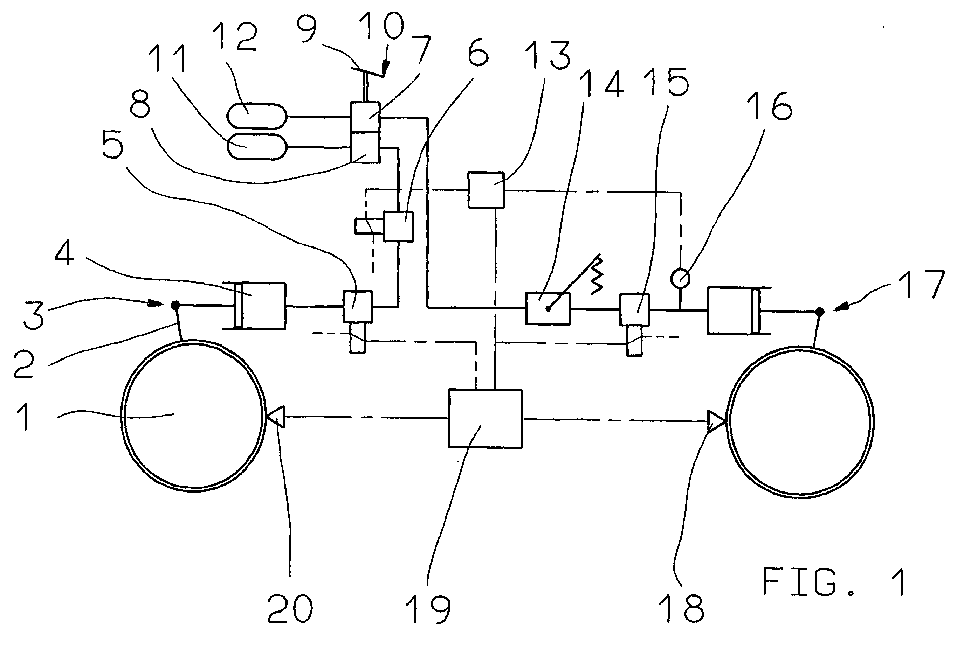

Die in Fig. 1 dargestellte Bremsanlage mit einer Vorderachsbremse (3) und einer Hinterachsbremse (17) besteht aus einer rein druckbetätigten Basisanlage, einer Blockierschutzanlage und einer Druckbegrenzungseinrichtung für die Vorderachse. Für eine Bremsanlage mit üblicherweise weiteren Vorderachs- und Hinterachsbremsen gelten die folgenden Ausführungen entsprechend. Die Bremsanlage ist für Druckluft als Druckmittel ausgelegt. Für andere Druckmittel, als welche insbesondere hydraulische in Betracht kommen, sind dem Fachmann geläufige Anpassungen erforderlich.

Die Basisanlage ist von einer verbreiteten Bauart und besteht aus einer Druckbeschaffungsanlage, den genannten Bremsen, Steuereinrichtungen und den zugehörigen Druckleitungen.

Der Begriff "Bremse" soll alle an der Bremskrafterzeugung beteiligten Komponenten umfassen. Dies sind die Radbremse, die mittels einer Bremstrommel und Bremsbacken bzw. mittels einer oder mehrerer Bremsscheiben und Bremsklötzen die Bremskraft erzeugt sowie die der gegenseitigen Anpressung dieser Bauteile dienende Zuspanneinrichtung, wie ein Bremszylinder, und etwaige Übertragungsglieder. An der Vorderachsbremse (3) sind, auch repräsentativ für die Hinterachsbremse (17), die Radbremse mit (1), die Zuspanneinrichtung mit (4) und Übertragungsglieder mit (2) angedeutet.

Von der Druckbeschaffungsanlage sind nur jeweils einer der Bremsen (3, 17) zugeordnete Druckspeicher (11 bzw. 12) dargestellt. Zu der Druckbeschaffungsanlage gehören außerdem ein oder mehrere Druckerzeuger und Druckmittelaufbereitungs- und Schutzeinrichtungen üblicher Bauarten, die nicht dargestellt sind.

Die Steuereinrichtungen bestehen aus einem Zweikreisbremsventil (10) und einem lastabhängigen Bremsdruckregler (14), für den im folgenden die übliche Kurzbenennung "ALB" verwendet wird. In dem Zweikreisbremsventil (10) sind ein Vorderachs-Bremsventil (8) und ein Hinterachs-Bremsventil (7) zusammengefaßt. Das Zweikreisbremsventil (10) weist ein Betätigungsorgan (9) auf, mittels dessen der Fahrer die Bremsanlage betätigen kann. In der Regel ist das Betätigungsorgan (9) als Pedal ausgebildet.

Die Eingänge der Bremsventile (8 bzw. 7) sind mit dem jeweils zugeordneten Druckspeicher (11 bzw. 12) verbunden. Der Ausgang des Vorderachs-Bremsventils (8) ist mit der Vorderachsbremse (3), und zwar mit deren Zuspanneinrichtung (4), verbunden. Der Ausgang des Hinterachs-Bremsventils (7) ist mit dem Eingang des ALB (14) verbunden, und dessen Ausgang ist mit der Hinterachsbremse (17), und zwar mit deren Zuspanneinrichtung, verbunden.

Die Blockierschutzanlage, nachstehend mit der üblichen Kurzbenennung "ABS" bezeichnet, ist ebenfalls von einer verbreiteten Bauart und besteht aus einer ABS-Elektronik (19) mit nicht bezeichneten Eingängen und Ausgängen, je einem ABS-Ventil (5 bzw. 15) für jede Bremse (3 bzw. 17) sowie Radsensoren (20 bzw. 18) an den den Bremsen (3 bzw. 17) zugeordneten Rädern. Das Vorderachs-ABS-Ventil (5) ist in der Druckleitung zwischen dem Vorderachs-Bremsventil (8) und der Vorderachs-Zuspanneinrichtung (4) angeordnet. Das Hinterachs-ABS-Ventil (15) ist in der Druckleitung zwischen dem ALB (14) und der Hinterachs-Zuspanneinrichtung angeordnet. Die Radsensoren (20, 18) sind elektrisch mit Eingängen der ABS-Elektronik (19) verbunden, die elektrischen Steuerteile der ABS-Ventile (5, 15) sind mit Ausgängen der ABS-Elektronik (19) verbunden.

Die Druckbegrenzungseinrichtung (6, 13, 16) besteht aus einem Hinterachs-Drucksensor (16), einer Druckbegrenzungs-Elektronik (13) und einem elektrisch schaltbaren Druckbegrenzungsventil (6).

Die Druckbegrenzungs-Elektronik (13) besitzt nicht näher bezeichnete Eingänge und Ausgänge und ist mit gebräuchlichen Mitteln elektrisch so bestückt, beispielsweise mit Mikroprozessoren, und/oder programmiert, daß sie die weiter unten beschriebenen Operationen ausführen kann.

Der Hinterachs-Drucksensor (16) ist elektrisch mit Eingängen der Druckbegrenzungs-Elektronik (13) verbunden, wandelt den von ihm gemessenen Druck in elektrische Drucksignale um und gibt diese an die Druckbegrenzungs-Elektronik (13) ab. Er erfaßt den Hinterachsbremsdruck in der Hinterachs-Zuspanneinrichtung und ist dementsprechend an geeigneter Stelle derselben oder des Hinterachs-ABS-Ventils (15) oder der dazwischen liegenden Druckleitung angeordnet.

In der Druckbegrenzungs-Elektronik (13) ist in elektrischen Größen ein auf einem niedrigen Druckniveau liegender Vergleichsdruck gespeichert.

Weitere Eingänge der Druckbegrenzungs-Elektronik (13) sind, parallel zu dem Hinterachs-ABS-Ventil (15), mit den diesem zugeordneten Ausgängen der ABS-Elektronik (19) verbunden. Das elektrisch schaltbare Druckbegrenzungsventil (6) ist in der Druckleitung zwischen dem Vorderachsbremsventil (8) und dem Vorderachs-ABS-Ventil (5) angeordnet. Es kann aber auch in der Druckleitung zwischen dem Vorderachs-Druckspeicher (11) und dem Vorderachs-Bremsventil (8) angeordnet sein.

Die elektrische Schalteinrichtung des Druckbegrenzungsventils (6) ist mit Ausgängen der Druckbegrenzungs-Elektronik (13) verbunden. Das Druckbegrenzungsventil (6) ist so ausgebildet, daß es bei Erhalt eines Schaltsignals von der Druckbegrenzungs-Elektronik (13) einen Druckbegrenzungs-Modus annimmt. In diesem Modus begrenzt es den Druck, den es von dem Vorderachs-Bremsventil (8) zu dem Vorderachs-ABS-Ventil (5) als Vorderachsbremsdruck durchläßt, bzw. mindert einen vorhandenen höheren Ist-Vorderachsbremsdruck auf einen vorbestimmten Vorderachs-Grenzdruck. Ohne Erhalt eines Schaltsignals von der Druckbegrenzungs-Elektronik (13) nimmt das Druckbegrenzungsventil (6) einen Durchgangsmodus an, in dem es den Druck von dem Vorderachs-Bremsventil (8) unbeeinflußt als Vorderachsbremsdruck durchläßt.

Zwecks Betätigung der Bremsanlage wirkt der Fahrer auf das Betätigungsorgan (9) des Zweikreisbremsventils (10) ein. Die Bremsventile (8 bzw. 7) lassen daraufhin aus dem jeweils zugeordneten Druckspeicher (11 bzw. 12) einen Druck durch, dessen Wert von der Betätigungskraft auf das Betätigungsorgan (9) und/oder von dessen Verstellweg abhängt. Bei Beginn einer Bremsbetätigung und ohne daß eine Blockierneigung auftritt, sind die ABS-Ventile (5, 15) durchgängig und das Druckbegrenzungsventil (6) in seinem Durchgangsmodus. Der von dem Vorderachs-Bremsventil (8) durchgelassene Druck baut sich durch das Druckbegrenzungsventil (6) und das Vorderachs-ABS-Ventil (5) hindurch als Vorderachsbremsdruck in der Vorderachs-Zuspanneinrichtung (4) auf. Der von dem Hinterachs-Bremsventil (7) durchgelassene Druck wird hingegen von dem ALB (14) entsprechend der Hinterachslast gemindert, so daß der sich durch das Hinterachs-ABS-Ventil (15) hindurch in der Hinterachs-Zuspanneinrichtung aufbauende Hinterachsbremsdruck abhängig von der Hinterachslast geregelt wird.

Die Bremsen (3, 17) erzeugen nun dem der jeweiligen Zuspanneinrichtung zugeführten Bremsdruck entsprechende Bremskräfte, wodurch das Fahrzeug entsprechend abgebremst wird.

Die Radsensoren (20, 18) geben Drehwinkelsignale an die ABS-Elektronik (19) ab. Diese überwacht anhand dieser Signale mittels einer von ihr gebildeten Referenzgeschwindigkeit, ob an einem der oder den den Bremsen (3, 17) zugeordneten Rädern eine Blockierneigung auftritt. Stellt die ABS-Elektronik (19) eine Blockierneigung fest, so gibt sie nach einprogrammierten Algorithmen ABS-Steuersignale in Gestalt von ABS-Druckabbausignalen, Druckhaltesignalen und Druckaufbausignalen an das bzw. die betreffende(n) ABS-Ventil(e) (5 bzw. 15) ab, woraufhin dieses bzw. diese den Bremsdruck in der jeweils zugeordneten Zuspanneinrichtung so begrenzen bzw. vorhandenen Bremsdruck soweit mindern, daß die Blockierneigung verschwindet.

Eine Blockierneigung kann auf zwei physikalischen Phänomenen beruhen. Das eine Phänomen ist ein geringer Fahrbahnreibwert, wie ihn beispielsweise eine nasse oder vereiste Fahrbahn aufweist. Das zweite Phänomen ist eine geringe Achslast, die auch bei normalem Fahrbahnreibwert ohne Blockierneigung nur die Übertragung einer geringen Bremskraft bei entsprechend niedrigem Bremsdruck von dem Rad bzw. den Rädern der Achse auf die Fahrbahn zuläßt. Dieses Phänomen kann beispielsweise unter den in der Beschreibungseinleitung genannten Bedingungen an der Hinterachse eines Fahrzeugs auftreten.

Das Auftreten einer Blockierneigung an der Hinterachse bei einem niedrigen Hinterachsbremsdruck kann also ein Indiz für eine geringe Bodenhaftung an der Hinterachse und die damit einhergehende Einbuße an Richtungsstabilität des Fahrzeugs sein.

Die Druckbegrenzungseinrichtung (6, 13, 16) erkennt dieses Indiz und führt Schritte zur Sicherstellung einer ausreichenden Richtungsstabilität des Fahrzeugs durch.

Ausgelöst wird diese Funktion der Druckbegrenzungseinrichtung (6, 13, 16) durch die Zuführung der von der ABS-Elektronik (19) an das Hinterachs-ABS-Ventil (15) abgegebenen ABS-Druckabbausignale auch an die Druckbegrenzungs-Elektronik (13). Jedesmal, wenn die Druckbegrenzungs-Elektronik (13) ein ABS-Druckabbausignal empfängt, vergleicht die Druckbegrenzungs-Elektronik (13) den von dem Hinterachs-Drucksensor (16) gemeldeten vorhandenen Ist-Hinterachsbremsdruck mit dem gespeicherten Vergleichsdruck. Ist bei Empfang eines Druckabbausignals der Ist-Hinterachsbremsdruck gleich dem Vergleichsdruck oder geringer als dieser, so gibt die Druckbegrenzungs-Elektronik (13) ein Schaltsignal an das Druckbegrenzungsventil (6). Dieses nimmt daraufhin seinen Druckbegrenzungs-Modus an. Die dadurch bewirkte Begrenzung des möglichen Vorderachsbremsdrucks auf den Vorderachs-Grenzdruck hat eine Begrenzung der erzielbaren Fahrzeugverzögerung auf einen Wert zur Folge, bei dem die Hinterachslast trotz dynamischer Hinterachsentlastung noch eine ausreichende Richtungsstabilität des Fahrzeugs gewährleistet.

Es liegt auf der Hand, daß die Festlegung des in der Druckbegrenzungs-Elektronik (13) gespeicherten Vergleichsdrucks und die Vorbestimmung des Vorderachs-Grenzdrucks auf die Eigenschaften des Fahrzeugs abgestimmt sein müssen. Oft wird der Vergleichsdruck in der Größenordnung von 25 % des Vorratsdrucks liegen.

Es sei noch erwähnt, daß sich die Begrenzung des Vorderachsbremsdrucks nur auf einer Fahrbahn mit normalem Fahrbahnreibwert in einer Begrenzung der erzielbaren Fahrzeugverzögerung auswirkt. Beruht die von der ABS-Elektronik (19) festgestellte Blockierneigung auf einem geringen Fahrbahnreibwert, so gibt die ABS-Elektronik (19) auch ABS-Steuersignale an das Vorderachs-ABS-Ventil (5) ab und setzt damit den ABS-Betrieb auch an der Vorderachse in Gang, bevor der Vorderachsbremsdruck den Vorderachs-Grenzdruck überhaupt erreichen kann. In diesem Fall wird also die erzielbare Fahrzeugverzögerung durch den geringen Fahrbahnreibwert begrenzt.

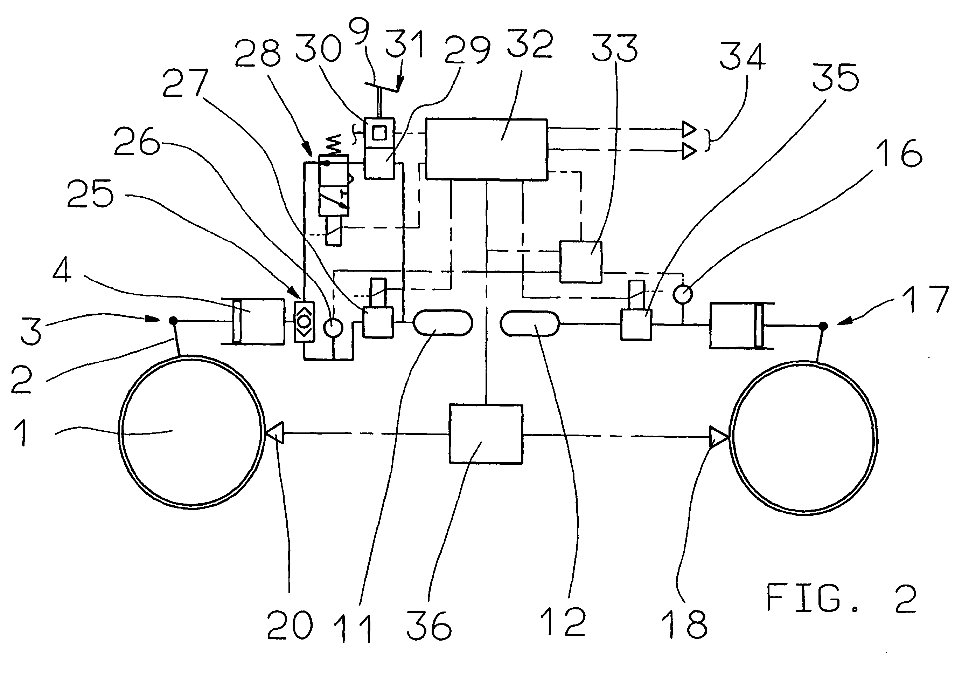

Bei der in Fig. 2 dargestellten Bremsanlage wird die Basisanlage üblicherweise als "elektrisch betätigt mit pneumatischer Redundanz" bezeichnet. Die Basisanlage und die ABS sind, wie sich aus dem Folgenden ergibt, in dieser Bremsanlage weitgehend miteinander integriert.

Die Steuereinrichtungen der Basisanlage bestehen aus einem elektro-pneumatischen Bremswertgeber (31), einer Steuerelektronik (32), je einem elektrisch betätigten Bremsdruckmodulator (27, 35) für die Bremsen (3, 17), einem Zweiwegeventil (25) und einem elektrisch betätigten 3/2-Wegeventil (28). Je nach Bauart der Bremsdruckmodulatoren (27, 35) können noch der schon erwähnte Hinterachs-Drucksensor (16) und ein den von dem Vorderachs-Bremsdruckmodulator (27) durchgelassenen Vorderachsbremsdruck erfassender Vorderachs-Drucksensor (26) den Steuereinrichtungen zuzurechnen sein.

Der Bremswertgeber (31) weist einen elektrischen Teil (30) und einen Druckteil (29) auf. Ausgänge des elektrischen Teils (30) sind mit Eingängen der Steuerelektronik (32) verbunden. Andere Eingänge der Steuerelektronik (32) sind über einen als Signalleitung dargestellten Datenbus mit der hier mit (36) bezeichneten ABS-Elektronik verbunden. Weitere Eingänge der Steuerelektronik (32) können mit Sensoren verbunden sein. Beispielhaft für solche sind mit dem gemeinsamen Bezugszeichen (34) zwei Sensoren dargestellt, die beispielsweise Achslastsensoren sein können.

Ausgänge der Steuerelektronik (32) sind mit den elektrischen Steuerteilen der Bremsdruckmodulatoren (27, 35) verbunden. Weitere Ausgänge der Steuerelektronik (32) sind mit dem elektrischen Steuerteil des 3/2-Wegeventils (28) verbunden.

Die Druckeingänge der Bremsdruckmodulatoren (27, 35) sind mit dem jeweils zugeordneten Druckspeicher (11 bzw. 12) verbunden. Der Druckausgang des Hinterachs-Bremsdruckmodulators (35) ist mit der Zuspanneinrichtung der Hinterachsbremse (17) verbunden, während der Druckausgang des Vorderachs-Bremsdruckmodulators (27) mit einem Eingang des Zweiwegeventils (25) verbunden ist, dessen Ausgang mit der Zuspanneinrichtung (4) der Vorderachsbremse (3) verbunden ist.

Der Eingang des Druckteils (29) des Bremswertgebers (31) ist mit dem Vorderachs-Druckspeicher (11), sein Ausgang ist mit dem anderen Eingang des Zweiwegeventils (25) verbunden. In der Verbindung zwischen dem Druckteil (29) des Bremswertgebers (31) und dem Zweiwegeventil (25) ist das 3/2-Wegeventil (28) angeordnet.

Die Bremsdruckmodulatoren (27, 35) dienen in dieser Bremsanlage auch als ABS-Ventile. Deshalb werden von der ABS-Elektronik (36) erzeugte ABS-Steuersignale über den Datenbus der Steuerelektronik (32) zugeführt.

Beim Einwirken des Fahrers auf das wieder mit (9) bezeichnete Betätigungsorgan des Bremswertgebers (31) erzeugt dessen elektrischer Teil (30) ein elektrisches Bremsbedarfsignal, während dessen Druckteil (29) aus dem Vorderachs-Druckspeicher (11) einen Druck durchläßt. Beide Ausgangsgroßen sind von der Betätigungskraft auf das Betätigungsorgan (9) und/oder von dessen Verstellweg abhängig.

Bei Empfang des Bremsbedarfsignals berechnet die Steuerelektronik (32) nach einprogrammierten Algorithmen aus dem Bremsbedarfsignal und den Signalen der Sensoren (34) den Bedarf an Vorderachsbremsdruck und Hinterachsbremsdruck und gibt entsprechende Bremsdruck-Steuersignale an die Bremsdruckmodulatoren (27, 35) ab. Diese lassen bei Empfang dieser Signale den jeweils berechneten Bremsdruck aus dem jeweils zugeordneten Druckspeicher (11 bzw. 12) zu der jeweiligen Bremse (3 bzw. 17) durch.

Sind die elektrischen Komponenten der Steuereinrichtungen im Normalbetrieb in Ordnung, gibt die Steuerelektronik (32) gleichzeitig mit der Berechnung des Bedarfs an Bremsdrücken oder mit der Ausgabe der BremsdruckSteuersignale an die Bremsdruckmodulatoren (27, 35) ein Sperrsignal an das 3/2-Wegeventil (28) ab. Dieses sperrt daraufhin die Verbindung zwischen dem Druckteil (29) des Bremswertgebers (31) und dem Zweiwegeventil (25) und verbindet dessen zugeordneten Eingang mit der Atmosphäre, so daß das Zweiwegeventil (25) in diesem Normalbetrieb nur Vorderachsbremsdruck von dem Vorderachs-Bremsmodulator (27) zu der Zuspanneinrichtung (4) der Vorderachsbremse (3) durchläßt. Es ist auch bekannt, das 3/2-Wegeventil (28) von dem von dem Vorderachs-Bremsdruckmodulator (27) durchgelassenen Vorderachsbremsdruck in seine Sperrstellung steuern zu lassen.

Tritt jetzt eine Blockierneigung auf, so gibt die ABS-Elektronik (36) über den erwähnten Datenbus die entsprechenden ABS-Steuersignale an die Steuerelektronik (32) ab, woraufhin diese die bisherige Ansteuerung des bzw. der betreffenden Bremsdruckmodulator(en) nach dem berechneten Bedarf an Bremsdrücken abbricht und an deren Stelle die Ansteuerung nach den von der ABS-Elektronik (36) übermittelten ABS-Steuersignalen setzt.

Im Falle von Störungen der elektrischen Komponenten der Steuereinrichtungen gibt die Steuerelektronik (32) kein Sperrsignal an das 3/2-Wegeventil (28) ab, woraufhin dieses die Verbindung zwischen dem Druckteil (29) des Bremswertgebers (31) und dem Zweiwegeventil (25) offenhält, so daß in dem nunmehr stattfindenden Notbetrieb die Vorderachsbremse (3) rein druckbetätigt ist. Ein ABS-Betrieb ist in dem Notbetrieb nicht möglich.

Solche Bremsanlagen sind bekannt, z. B. aus der US-A-5145239 (die auf die DE-A-3916642 zurückgeht).

In dieser Bremsanlage besteht die mit (16, 26, 27, 33) zu bezeichnende Druckbegrenzungseinrichtung außer aus dem Hinterachs-Drucksensor (16) und der mit (33) zu bezeichnenden Druckbegrenzungs-Elektronik aus dem Vorderachs-Bremsdruckmodulator (27), dem bereits erwähnten Vorderachs-Bremsdrucksensor (26) und einer Zusatzausbildung der Steuerelektronik (32).

Die Zusatzausbildung der Steuerelektronik (32) besteht zum einen darin, daß diese an bisher nicht erwähnten Eingängen mit Ausgängen der Druckbegrenzungs-Elektronik (33) verbunden ist, über die ihr das Schaltsignal der Druckbegrenzungs-Elektronik zugeführt führt. Zum anderen besteht diese Zusatzausbildung darin, daß die Steuerelektronik (32) bei Empfang des Schaltsignals von der Druckbegrenzungselektronik (33) das Bremsdruck-Steuersignal an den Vorderachs-Bremsdruckmodulator (27) so gestaltet, daß dieser in seine Druckhaltestellung geht.

Der Vorderachs-Drucksensor (26) ist an geeigneter Stelle der Vorderachs-Zuspanneinrichtung (4), des Vorderachs-Bremsdruckmodulators (27) oder der dazwischen liegenden Druckleitung angeordnet und elektrisch mit Eingängen der Steuerelektronik (33) verbunden. An weiteren Eingängen ist die Steuerelektronik (33) mit dem erwähnten Datenbus zwischen der ABS-Elektronik (36) und der Steuerelektronik (32) verbunden.

In der Druckbegrenzungs-Elektronik (33) ist in elektrischen Größen auch der Vorderachs-Grenzdruck gespeichert. Bei Empfang von ABS-Druckabbausignalen über den Datenbus von der ABS-Elektronik (36) vergleicht die Druckbegrenzungs-Elektronik (33) außer dem jeweils vorhandenen Ist-Hinterachsbremsdruck mit dem Vergleichsdruck auch den von dem Vorderachs-Drucksensor (26) gemeldeten Ist-Vorderachsbremsdruck mit dem eingespeicherten Vorderachs-Grenzdruck. Stellt die Druckbegrenzungselektronik (33) bei Gleichheit des Ist-Hinterachsbremsdrucks und des Vergleichsdrucks oder bei Überwiegen des letzteren auch Gleichheit des Ist-Vorderachsbremsdrucks und des Vorderachs-Grenzdrucks fest, gibt sie das Schaltsignal an die Steuerelektronik (32) ab, die daraufhin den Vorderachs-Bremsdruckmodulator (27) in die Druckhaltestellung steuert und dadurch verhindert, daß der Ist-Vorderachsbremsdruck den Vorderachs-Grenzdruck überschreitet.

Der Vorderachs-Bremsdruckmodulator (27), der Vorderachs-Bremsdrucksensor (26), die Zusatzausbildung der Steuerelektronik (32) und die Druckbegrenzungs-Elektronik (33) übernehmen bei dieser Bremsanlage also die Rolle des Druckbegrenzungsventils (6) der Bremsanlage nach Fig. 1.

Eine Bremsanlage verhält sich wegen Veränderungen in den Wirkungsweisen ihrer Komponenten nicht immer gleichmäßig. Insbesondere können die Charakteristika der Bremsen sich ändern, z. B. durch Erwärmung, Verschmutzung (beispielsweise durch Bremsbelagabrieb), Abnutzung. Deshalb ist mit der Bremsanlage gemäß Fig. 1 und der Bremsanlage gemäß Fig. 2 im bisher beschriebenen Umfang bei normalem Fahrbahnreibwert mit dem feststehenden Vorderachs-Grenzdruck als Höchstwert des Vorderachsbremsdrucks nicht immer die gleiche Fahrzeugverzögerung erzielbar.

Die nicht beanspruchte Bremsanlage nach Fig. 2 läßt sich aber durch eine Fortbildung der Druckbegrenzungseinrichtung (16, 26, 27, 33) dahin weiterentwickeln, daß der Vorderachs-Grenzdruck korrigierbar ist, wenn er nicht zu einer geforderten vorbestimmten Soll-Fahrzeugverzögerung führt.

Zwecks dieser Fortbildung werden in der Druckbegrenzungs-Elektronik (33) in elektrischen Größen auch ein entsprechender Fahrzeugverzögerungs-Sollwert gespeichert und der erzielte Fahrzeugverzögerungs-Istwert in elektrischen Größen gebildet. Letzteres geschieht, indem die Druckbegrenzungs-Elektronik (33) über den Datenbus der ABS-Elektronik (36) zeitliche Veränderungen der von der Blockierschutzanlage verwendeten Referenzgeschwindigkeit entnimmt und daraus deren Abfallgeschwindigkeit als Maß für den Fahrzeugverzögerungs-Istwert berechnet. Bei Abgabe des Schaltsignals, also wenn der Ist-Vorderachsbremsdruck den Wert des Vorderachs-Grenzdrucks erreicht hat, vergleicht die Druckbegrenzungs-Elektronik (33) den berechneten Fahrzeugverzögerungs-Istwert mit dem eingespeicherten Fahrzeugverzögerungs-Sollwert. Weicht der Istwert von dem Sollwert ab, setzt die Druckbegrenzungselektronik (33) den Vorderachs-Grenzdruck so herauf oder herab, korrigiert ihn also, daß sich der Fahrzeugverzögerungs-Istwert dem Fahrzeugverzögerungs-Sollwert angleicht.

In einer anderen Ausgestaltung kann der vorhandene Fahrzeugverzögerungs-Istwert der Druckbegrenzungs-Elektronik (33) mittels eines Verzögerungssensors zugeführt werden. Ein solcher Sensor verursacht allerdings gegenüber der vorstehend beschriebenen Lösung einen erhöhten Aufwand.

Die zu den erläuterten Bremsanlagen gehörenden Elektroniken sind der besseren Übersichtlichkeit halber getrennt dargestellt, werden in der Praxis aber regelmäßig baulich und funktionell integriert sein, so daß auch unter diesem Gesichtspunkt die Druckbegrenzungseinrichtung und damit das erfindungsgemäße Verfahren ohne oder zumindest mit sehr geringem zusätzlichen Aufwand ausführbar sind.

Soweit sich aus den vorstehenden Ausführungen nichts anderes ergibt, gelten die für die eine Bremsanlage gemachten Aussagen für die andere Bremsanlage direkt oder in entsprechender Weise mit.

Der Fachmann erkennt, daß sich die Erfindung nicht nur mit den beispielhaft beschriebenen Bremsanlagen realisieren läßt, sondern mit allen Bremsanlagen, welche die Merkmale der Patentansprüche realisieren.

## Patentansprüche

1. Verfahren zur Abbremsung eines Fahrzeugs mit wenigstens einer Vorderachse und wenigstens einer Hinterachse, die jeweils mit wenigstens einer durch Druck betätigten Bremse (3, 17) einer blockiergeschützten Bremsanlage bestückt sind, wobei die blockiergeschützte Bremsanlage wenigstens ein ABS-Ventil (5, 15) aufweist, welches mit einem Bremsdruck beaufschlagbar ist, **dadurch gekennzeichnet, daß** der Vorderradbremsdruck über ein Druckbegrenzungsventil (6) zu dem ABS-Ventil (5, 15) geführt wird, wobei der von dem Druckbegrenzungsventil (6) an das ABS-Ventil (5, 15) abgegebene Druck beim Blockierschutzbetrieb der Hinterachse auf einem niedrigen Hinterachsbremsdruck-Niveau gegenüber dem Vorderradbremsdruck auf einem vorbestimmten Grenzdruck minderbar ist, wobei der Grenzdruck während der Abbremsung veränderbar ist.

## Claims

1. Method of braking a vehicle having at least one front axle and at least one rear axle which are in each case provided with at least one pressure-actuated brake (3, 17) of an anti-lock braking system, the anti-lock braking system comprising at least one ABS valve (5, 15) which is arranged to be acted upon by a braking pressure, **characterised in that** the front wheel braking pressure is supplied to the ABS valve (5, 15) by way of a pressure-limiting valve (6), the pressure delivered to the ABS valve (5, 15) by the pressure-limiting valve (6) in anti-lock braking operation of the rear axle at a low rear axle braking pressure level being arranged to be reduced with respect to the front wheel braking pressure to a predetermined limit pressure, the limit pressure being modifiable during the braking.

## Revendications

1. Procédé pour freiner un véhicule pourvu d'au moins un essieu avant et d'au moins un essieu arrière équipés chacun d'au moins un frein (3, 17) actionné par pression d'une installation de freinage anti-blocage, l'installation de freinage anti-blocage comprenant au moins une valve ABS (5, 15) qui est susceptible d'être alimentée par une pression de freinage, **caractérisé en ce que** la pression de freinage de la roue avant est amenée à la valve ABS (5, 15) via une valve de limitation de pression (6), et la pression fournie par la valve de limitation de pression (6) à la valve ABS (5, 15) est susceptible d'être réduite à une pression limite prédéterminée par rapport à la pression de freinage de la roue avant pendant le fonctionnement anti-blocage de l'essieu arrière à un niveau de pression plus faible de l'essieu arrière, la pression limite étant variable pendant le freinage.
